# EUROPÄISCHE PATENTSCHRIFT

(11) **EP 3 234 411 B1**
(45) Veröffentlichungstag und Bekanntmachung des Hinweises auf die Patenterteilung: **15.08.2018**
(21) Anmeldenummer: 15801992.7
(22) Anmeldetag: 27.11.2015
(51) Int. Cl.: F16H 61/02, F16H 61/30, F16H 61/688

(54) **HYDRAULIKSYSTEM FÜR EIN KRAFTFAHRZEUGGETRIEBE**
HYDRAULIC SYSTEM FOR A VEHICLE TRANSMISSION
SYSTEME HYDRAULIQUE POUR TRANSMISSION DE VEHICULE AUTOMOBILE

(30) Priorität: 18.12.2014 DE 102014019010
(43) Veröffentlichungstag der Anmeldung: 25.10.2017
(73) Patentinhaber: Daimler AG, 70327 Stuttgart (DE)
(72) Erfinder: SCHINDLER, Jörg, 74321 Bietigheim-Bissingen (DE)
(74) Vertreter: JENSEN & SON
(86) Internationale Anmeldenummer: PCT/EP2015/002393
(87) Internationale Veröffentlichungsnummer: WO 2016/096092

(56) Entgegenhaltungen:
- EP-A1- 1 710 477
- WO-A2-2008/055464
- GB-A- 2 468 867
- US-A1- 2011 028 271

## Beschreibung

Die Erfindung betrifft ein Hydrauliksystem für ein Kraftfahrzeuggetriebe.

Aus der EP 1 420 185 A2 ist bereits ein Hydrauliksystem für ein Kraftfahrzeuggetriebe, mit mehreren Gangstellerdruckräumen, die zur Schaltung von mehreren Getriebegängen vorgesehen sind, bekannt.

Aus der DE 10 2005 058 779 A1 ist ein Hydrauliksystem bekannt, das 5 doppelt wirkende Zylinder mit 10 Gangstellerdruckkammern aufweist. Die Versorgung der 5 Zylinder mit Schaltdruck sowie die Steuerung der Hydraulik ist dort allerdings auf aufwändige Weise gelöst.

Aus der EP 1 710 477 A1 ist ein Hydrauliksystem mit allen Merkmalen des Oberbegriffes des Anspruchs 1 bekannt.

Der Erfindung liegt insbesondere die Aufgabe zugrunde, das Hydrauliksystem zu vereinfachen und eine Steuerbarkeit zu verbessern. Diese Aufgabe wird durch eine erfindungsgemäße Ausgestaltung entsprechend dem Anspruch 1 gelöst. Weiterbildungen der Erfindung ergeben sich aus den abhängigen Ansprüchen.

Das Hydrauliksystem für ein Kraftfahrzeuggetriebe weist dabei wenigstens zehn Gangstellerdruckräume auf, die zur Schaltung von mehreren Getriebegängen vorgesehen sind, es weist weiterhin wenigstens zwei Betätigungsventile auf, die jeweils dazu vorgesehen sind, zumindest einen Betätigungsdruck für die Gangstellerdruckräume einzustellen, es weist weiterhin wenigstens eine erste Auswahlventileinheit, wenigstens eine zweite Auswahlventileinheit und wenigstens eine dritte Auswahlventileinheit auf, die dazu vorgesehen sind, die Betätigungsventile an die Gangstellerdruckräume anzubinden.

Erfindungsgemäß ist die zweite Auswahlventileinheit zur Betätigungsdruckübertragung unmittelbar an vier Gangstellerdruckräume angebunden, und die dritte Auswahlventileinheit ist zur Betätigungsdruckübertragung unmittelbar an 6 andere Gangstellerdruckräume und unmittelbar an die zweite Auswahlventileinheit angebunden.

Auf diese Weise sind nur zwei Auswahlventileinheiten unmittelbar an 10 Gangstellerdruckräume angebunden, wodurch ein effizientes und kostengünstiges Hydraulikdesign dargestellt wird.

Eine vorteilhafte Weiterbildung der Erfindung ist dadurch gekennzeichnet, dass die dritte Auswahlventileinheit ein erstes und ein zweites Auswahlventil aufweist, wobei das zweite Auswahlventil die erste Auswahlventileinheitwahlweise an zwei der Gangstellerdruckräume oder an die zweite Auswahlventileinheit (33) hydraulisch anbindet.

In einer weiteren vorteilhaften Weiterbildung wird ein Hydrauliksystem für ein Kraftfahrzeuggetriebe vorgeschlagen, mit wenigstens zehn Gangstellerdruckräumen, die zur Schaltung von mehreren Getriebegängen vorgesehen sind, mit wenigstens zwei Betätigungsventilen, die jeweils dazu vorgesehen sind, zumindest einen Betätigungsdruck für die Gangstellerdruckräume einzustellen, mit wenigstens einer ersten Auswahlventileinheit, wenigstens einer zweiten Auswahlventileinheit und wenigstens einer dritten Auswahlventileinheit, die dazu vorgesehen sind, die Betätigungsventile an die Gangstellerdruckräume anzubinden, wobei zumindest die erste Auswahlventileinheit und die zweite Auswahlventileinheit unterschiedliche Schaltdruckschwellen aufweisen, sowie mit wenigstens einem ersten Steuerventil, das steuerungstechnisch zumindest an die erste Auswahlventileinheit und die zweite Auswahlventileinheit angebunden ist und das dazu vorgesehen ist, zur zumindest teilweise getrennten Schaltung der ersten Auswahlventileinheit und der zweiten Auswahlventileinheit zumindest zwei voneinander unterschiedliche Steuerdrücke einzustellen, und mit wenigstens einem zweiten Steuerventil, das steuerungstechnisch zumindest an die dritte Auswahlventileinheit angebunden ist und das dazu vorgesehen ist, zur Schaltung der dritten Auswahlventileinheit zumindest einen Steuerdruck einzustellen. Durch eine solche Ausgestaltung des Hydrauliksystems können mit einer besonders geringen Anzahl an Ventilen eine besonders hohe Anzahl an Getriebegängen geschaltet werden, wodurch zur Schaltung von einer hohen Anzahl an Getriebegängen ein besonders kompaktes, leichtes und/oder kostengünstiges Hydrauliksystem bereitgestellt werden kann. Insbesondere kann ein besonders kompaktes, leichtes und/oder kostengünstiges Hydrauliksystem bereitgestellt werden, mittels dem mehr als sieben Vorwärtsgetriebegänge schaltbar sind. Dadurch kann das Hydrauliksystem insbesondere hinsichtlich einer schaltbaren Getriebeganganzahl bauraum-, gewicht- und/oder kostensparend verbessert werden.

Die Auswahlventileinheiten sind vorzugsweise dazu vorgesehen, den durch zumindest einen der Betätigungsventile eingestellten Betätigungsdruck zu dem entsprechenden Gangstellerdruckraum zu leiten. Die Auswahlventileinheiten weisen vorzugsweise lediglich rein hydraulische Schaltschieber auf. Unter einer "Auswahlventileinheit" soll insbesondere eine Einheit verstanden werden, die wenigstens ein Auswahlventil aufweist, wobei die Einheit, insbesondere aus produktions- und/oder bauraumtechnischen Gründen, auch mehrere Auswahlventile aufweisen kann. Weist eine Auswahlventileinheit lediglich ein Auswahlventil auf, so ist diese Auswahlventileinheit vorzugsweise durch das Auswahlventil gebildet. Weist eine Auswahlventileinheit mehrere, insbesondere zwei, Auswahlventile auf, so ist diese Auswahlventileinheit vorzugsweise durch die mehreren, insbesondere durch die zwei, Auswahlventile gebildet, wobei es grundsätzlich denkbar ist, die Funktion der mehreren, insbesondere der zwei, Auswahlventile durch ein einziges Auswahlventil darzustellen. Vorteilhaft weist die erste Auswahlventileinheit lediglich ein einziges Auswahlventil, die zweite Auswahlventileinheit lediglich ein einziges Auswahlventil und die dritte Auswahlventileinheit lediglich zwei Auswahlventile auf. Unter einer "Schaltdruckschwelle" soll insbesondere eine Steuerdruckschwelle eines Ventil oder einer Ventileinheit verstanden werden, so dass bei einem Steuerdruck oberhalb der Steuerdruckschwelle das Ventil oder die Ventileinheit in seiner Schaltstellung und bei einem Steuerdruck unterhalb der Steuerdruckschwelle das Ventil oder die Ventileinheit in seiner Grundstellung geschaltet ist. Die Schaltdruckschwelle ist vorzugsweise durch zumindest eine Feder und/oder durch zumindest eine Steuerdruckfläche, auf die der Steuerdruck wirkt, des entsprechenden Ventils oder der entsprechenden Ventileinheit definiert oder eingestellt. Vorzugsweise wirkt der durch das erste Steuerventil eingestellte Steuerdruck gleichzeitig als Steuerdruck für die erste Auswahlventileinheit und als Steuerdruck für die zweite Auswahlventileinheit. Unter einer "Grundstellung" soll insbesondere eine Ventilstellung eines Ventils oder einer Ventileinheit verstanden werden, die das Ventil oder die Ventileinheit ohne Anliegen eines Steuerdrucks einnimmt, wodurch das Ventil die Grundstellung vorzugsweise auch bei einem stehenden Verbrennungsmotor des das Kraftfahrzeuggetriebe aufweisenden Kraftfahrzeugs einnimmt. Vorzugsweise sind die Betätigungsventile und/oder die Steuerventile elektrisch ansteuerbar. Unter "vorgesehen" soll insbesondere speziell ausgebildet, ausgelegt, ausgestattet und/oder angeordnet verstanden werden.

Weiter wird vorgeschlagen, dass die erste Auswahlventileinheit dazu vorgesehen ist, beide Betätigungsventile an die dritte Auswahlventileinheit anzubinden, wodurch bereits eine Weiterleitung des Betätigungsdrucks zu der dritten Auswahlventileinheit zwischen zumindest zwei Verbindungspfaden unterschieden werden kann. Die Betätigungsventile sind vorzugsweise lediglich über die erste Auswahlventileinheit an die dritte Auswahlventileinheit anbindbar. Vorteilhaft ist der durch die Betätigungsventile eingestellte Betätigungsdruck lediglich über die erste Auswahlventileinheit zu der dritten Auswahlventileinheit leitbar.

Ferner wird vorgeschlagen, dass die dritte Auswahlventileinheit dazu vorgesehen ist, die erste Auswahlventileinheit an die zweite Auswahlventileinheit anzubinden, wodurch ohne ein zusätzliches Ventil eine Anzahl an wählbaren Verbindungspfaden für den durch die Betätigungsventile eingestellten Betätigungsdruck erhöht werden kann. Die erste Auswahlventileinheit ist vorzugsweise lediglich über die dritte Auswahlventileinheit an die zweite Auswahlventileinheit anbindbar. Vorteilhaft ist der durch die erste Auswahlventileinheit weitergeleitete Betätigungsdruck lediglich über die dritte Auswahlventileinheit zu der zweiten Auswahlventileinheit leitbar.

Insbesondere ist es vorteilhaft, wenn die dritte Auswahlventileinheit dazu vorgesehen ist, die erste Auswahlventileinheit an zumindest eines der Gangstellerdruckräume anzubinden, wodurch die Betätigungsventile entsprechend dem zu schaltenden Getriebegang an die Gangstellerdruckräume angebunden werden können. Die dritte Auswahlventileinheit ist vorzugsweise dazu vorgesehen, die erste Auswahlventileinheit an zumindest einen Gangstellerdruckraum und an die zweite Auswahlventileinheit anzubinden. Die zweite Auswahlventileinheit und die dritte Auswahlventileinheit sind vorzugsweise strömungstechnisch zwischen den Gangstellerdruckräumen und der ersten Auswahlventileinheit angeordnet. Die zweite Auswahlventileinheit ist vorzugsweise dazu vorgesehen, den durch die erste Auswahlventileinheit und die dritte Auswahlventileinheit weitergeleiteten Betätigungsdruck zu wenigstens einem der Gangstellerdruckräume weiterzuleiten. Der durch die erste Auswahlventileinheit weitergeleitete Betätigungsdruck ist entweder über die dritte Auswahlventileinheit zu zumindest einem Gangstellerdruckraum leitbar oder über die dritte Auswahlventileinheit und die zweite Auswahlventileinheit zu zumindest einem Gangstellerdruckraum leitbar. Die zweite Auswahlventileinheit und die dritte Auswahlventileinheit sind vorzugsweise dazu vorgesehen, den durch die erste Auswahlventileinheit weitergeleiteten Betätigungsdruck zu dem entsprechenden Gangstellerdruckraum weiterzuleiten. Die zweite Auswahlventileinheit ist vorzugsweise dazu vorgesehen, vier der Gangstellerdruckräume mit dem durch die erste Auswahlventileinheit und die dritte Auswahlventileinheit weitergeleiteten Betätigungsdruck zu versorgen. Die dritte Auswahlventileinheit ist vorzugsweise dazu vorgesehen, sechs der Gangstellerdruckräume mit dem durch die erste Auswahlventileinheit weitergeleiteten Betätigungsdruck zu versorgen.

Ferner ist es vorteilhaft, wenn die Schaltdruckschwelle der zweiten Auswahlventileinheit größer ist als die Schaltdruckschwelle der ersten Auswahlventileinheit, wodurch ein vorteilhafter Zustand, in dem die erste Auswahlventileinheit in seiner Schaltstellung und die zweite Auswahlventileinheit in seiner Grundstellung geschaltet sind, realisiert werden kann.

In einer vorteilhaften Ausgestaltung weist das Hydrauliksystem zumindest ein weiteres Ventil mit einer von der dritten Auswahlventileinheit unterscheidenden Schaltdruckschwelle auf, wobei das zweite Steuerventil steuerungstechnisch an das zumindest eine weitere Ventil angebunden ist und dazu vorgesehen ist, zur zumindest teilweise getrennten Schaltung der dritten Auswahlventileinheit und des weiteren Ventils zumindest zwei voneinander unterschiedliche Steuerdrücke einzustellen. Dadurch kann das zweite Steuerventil zusätzlich zur Ansteuerung der dritten Auswahlventileinheit zur Ansteuerung des zumindest einen weiteren Ventils genutzt werden, wodurch besonders gewichts-, bauraum- und/oder kostensparend zumindest eine weitere Einheit des Hydrauliksystem betätigt werden kann. Vorzugsweise wirkt der durch das zweite Steuerventil eingestellte Steuerdruck gleichzeitig als Steuerdruck für die dritte Auswahlventileinheit und als Steuerdruck für das zumindest eine weitere Ventil. Die zwei Steuerventile sind vorteilhaft jeweils dazu vorgesehen, zwei Ventile anzusteuern, insbesondere indem sie jeweils dazu vorgesehen sind, zwei unterschiedliche Steuerdrücke einzustellen.

Des Weiteren wird vorgeschlagen, dass die Schaltdruckschwelle des weiteren Ventils größer ist als die Schaltdruckschwelle der dritten Auswahlventileinheit, wodurch ein vorteilhafter Zustand, in dem die dritte Auswahlventileinheit in seiner Schaltstellung und das weitere Ventil in seiner Grundstellung geschaltet sind, realisiert werden kann.

Ferner wird vorgeschlagen, dass das weitere Ventil zur Ansteuerung einer Parksperre vorgesehen ist, wodurch mittels den drei Auswahlventileinheiten und den zwei Steuerventilen eine Betätigungsruckversorgung der mindestens zehn Gangstellerdruckräumen und eine Betätigung der Parksperre gesteuert werden kann.

Insbesondere ist es vorteilhaft, wenn das Hydrauliksystem wenigstens fünf doppeltwirkende Gangsteller aufweist, die jeweils zwei der Gangstellerdruckräume aufweisen, wodurch das Hydrauliksystem hinsichtlich seines Bauraumbedarfs, seines Gewichts und/oder seiner Kosten weiter verbessert werden kann. Unter einem "doppeltwirkenden Gangsteller" soll insbesondere ein Gangsteller verstanden werden, der einen Betätigungszylinder und einen, in dem Betätigungszylinder verschiebbar angeordneten Betätigungskolben aufweist, wobei der Betätigungszylinder und der Betätigungskolben zwei einander entgegenwirkende Gangstellerdruckräume einschließen, wodurch der Betätigungskolben durch einen Betätigungsdruck in dem ersten Gangstellerdruckraum in eine erste Schaltrichtung und durch einen Betätigungsdruck in dem zweiten Gangstellerdruckraum in eine zweite Schaltrichtung verschiebbar ist. Die Auswahlventileinheiten sind vorteilhaft dazu vorgesehen, das erste Betätigungsventil jeweils an einen der zwei Gangstellerdruckräume der doppeltwirkenden Gangsteller und das zweite Betätigungsventil jeweils an den anderen der zwei Gangstellerdruckräumen der doppeltwirkenden Gangstellers anzubinden.

Ferner ist es vorteilhaft, wenn die Gangstellerdruckräume in erste Gangstellerdruckräume der Gangsteller und in zweite Gangstellerdruckräume der Gangsteller unterteilt sind und die Auswahlventileinheiten dazu vorgesehen sind, das erste Betätigungsventil an die ersten Gangstellerdruckräume und das zweite Betätigungsventil an die zweiten Gangstellerdruckräume anzubinden. Dadurch kann die Steuerung der Betätigungsdruckversorgung der zehn Gangstellerdruckräume vereinfacht werden.

Weitere Vorteile ergeben sich aus der folgenden Figurenbeschreibung. In den Figuren ist ein Ausführungsbeispiel der Erfindung dargestellt. Die Figuren, die Figurenbeschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Dabei zeigen:
- Fig. 1: ein Hydrauliksystem eines Kraftfahrzeuggetriebes und
- Fig. 2: einen Teil des Hydrauliksystems vergrößert dargestellt.

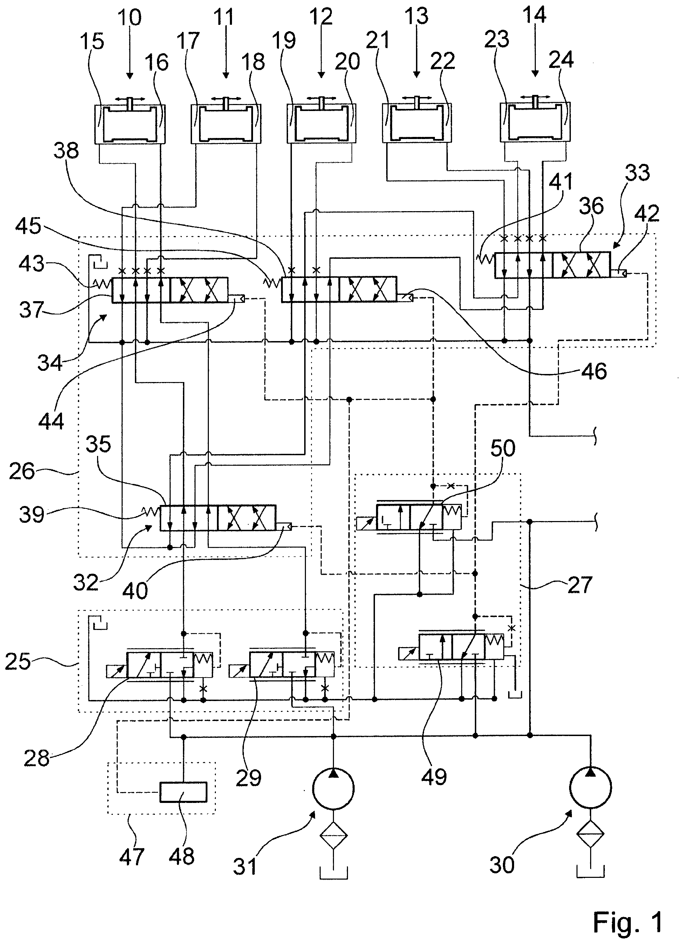

In der Figur 1 ist ein Hydrauliksystem eines Kraftfahrzeuggetriebes dargestellt. Das Kraftfahrzeuggetriebe ist als ein Doppelkupplungsgetriebe ausgebildet. Es ist zur Schaltung von vielen, insbesondere mindestens neun, Vorwärtsgetriebegängen und zumindest einem Rückwärtsgetriebegang vorgesehen. Zur Schaltung der Getriebegänge weist das Hydrauliksystem fünf doppeltwirkende Gangsteller 10, 11, 12, 13, 14 auf. Die Gangsteller 10, 11, 12, 13, 14 weisen jeweils ein Schaltelement auf, das hydraulisch verschiebbar ist. Das Schaltelement ist als eine Schiebemuffe ausgebildet. Ferner weisen die Gangsteller 10, 11, 12, 13, 14 jeweils eine an die jeweilige Schiebemuffe angebundene Schaltgabel auf, die sich mit der Schiebemuffe verschiebt und den jeweiligen Getriebegang einlegt.

Die Gangsteller 10, 11, 12, 13, 14 weisen jeweils zwei einander entgegenwirkende Gangstellerdruckräume 15, 16, 17, 18, 19, 20, 21, 22, 23, 24 auf. Das Hydrauliksystem weist zehn Gangstellerdruckräume 15-24 zur Schaltung der Getriebegänge auf. Der erste Gangsteller 10 umfasst die zwei Gangstellerdruckräume 15, 16, der zweite Gangsteller 11 umfasst die zwei Gangstellerdruckräume 17, 18, der dritte Gangsteller 12 umfasst die zwei Gangstellerdruckräume 19, 20, der vierte Gangsteller 13 umfasst die zwei Gangstellerdruckräume 21, 22 und der fünfte Gangsteller 14 umfasst die zwei Gangstellerdruckräume 23, 24. Die Gangstellerdruckräume 15-24 sind in erste Gangstellerdruckräume 15, 17, 19, 21, 23 der Gangsteller 10, 11, 12, 13, 14 und in zweite Gangstellerdruckräume 16, 18, 20, 22, 24 der Gangsteller 10, 11, 12, 13, 14 unterteilt.

Zur Förderung eines Betätigungsmittels zur Betätigung der Gangsteller 10, 11, 12, 13, 14 weist das Hydrauliksystem eine erste Betriebsmittelpumpe 30 auf. Die erste Betriebsmittelpumpe 30 ist antriebstechnisch an einen Verbrennungsmotor eines das Kraftfahrzeuggetriebe aufweisenden Kraftfahrzeugs angebunden. Der Verbrennungsmotor treibt die erste Betriebsmittelpumpe 30 an. Die erste Betriebsmittelpumpe 30 ist als eine Hauptpumpe ausgebildet. Das Hydrauliksystem weist ferner eine zweite Betriebsmittelpumpe 31 auf, die dazu vorgesehen ist, die erste Betriebsmittelpumpe 30 zu unterstützen oder in bestimmten Betriebszuständen zu ersetzen. Die zweite Betriebsmittelpumpe 31 weist einen elektrischen Antrieb auf. Die zweite Betriebsmittelpumpe 31 ist als eine elektrische Zusatzpumpe ausgebildet. Das Betätigungsmittel ist als Öl ausgebildet. Grundsätzlich kann auf die zweite Betriebsmittelpumpe 31 auch verzichtet werden.

Das Hydrauliksystem weist ferner eine Parksperrenvorrichtung 47 auf, die zur Arretierung eines das Kraftfahrzeuggetriebe aufweisenden Kraftfahrzeugantriebsstrangs vorgesehen ist. Die Parksperrenvorrichtung 47 ist der Übersicht halber stark vereinfacht dargestellt. Die Parksperrenvorrichtung 47 weist zur Betätigung eines Parksperrenkolbens ein Ventil 48 auf. Das Ventil 48 ist zur Ansteuerung einer Parksperre vorgesehen. Es ist dazu vorgesehen, das durch zumindest eine der Betriebsmittelpumpen 30, 31 geförderte Betätigungsmittel zu einem Druckraum einer nicht dargestellten Parksperrenbetätigungseinheit der Parksperrenvorrichtung 47 zu leiten. Das Ventil 48 weist einen Eingang auf, der hydraulisch an die Betriebsmittelpumpen 30, 31 angebunden ist. Das Ventil 48 ist als ein Parksperrenventil ausgebildet. Es ist als ein Schaltschieber ausgebildet.

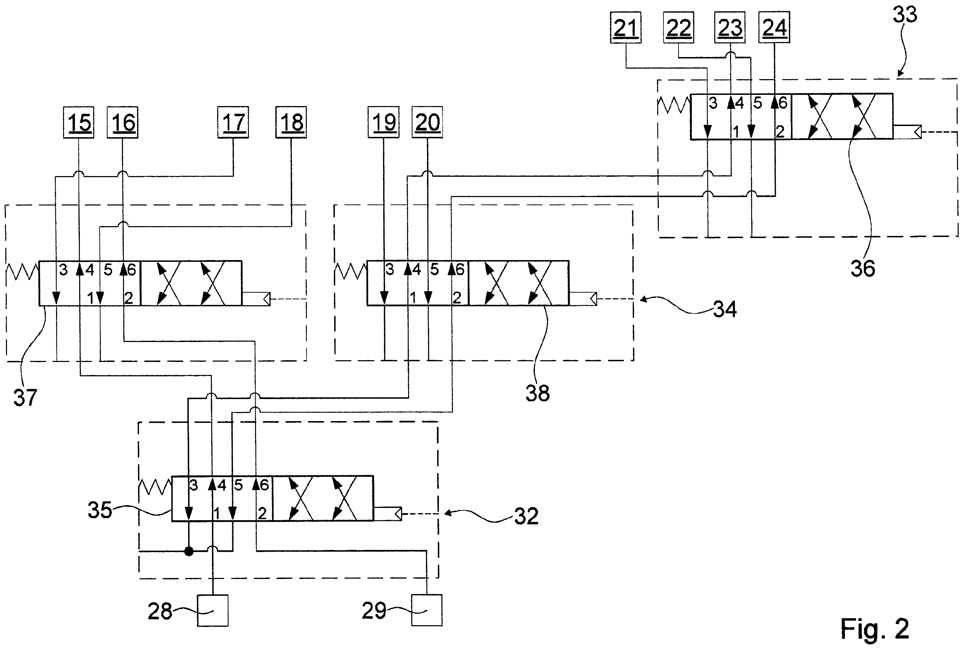

Zur elektrohydraulischen Ansteuerung der fünf Gangsteller 10, 11, 12, 13, 14 weist das Hydrauliksystem eine Betätigungsventilanordnung 25, eine Auswahlventilanordnung 26 und eine Steuerventilanordnung 27 auf. Die Betätigungsventilanordnung 25 ist dazu vorgesehen, einen Betätigungsdruck für die Gangstellerdruckräume 15-24 einzustellen. Die Auswahlventilanordnung 26 ist dazu vorgesehen, die Betätigungsventilanordnung 25 entsprechend einem zu schaltenden Getriebegang an die Gangstellerdruckräume 15-24 anzubinden. Sie ist dazu vorgesehen, den Betätigungsdruck zu dem entsprechenden Gangstellerdruckraum 15-24 zu leiten. Die Auswahlventilanordnung 26 ist strömungstechnisch zwischen den Gangstellerdruckräumen 15-24 und der Betätigungsventilanordnung 25 angeordnet. In der Figur 2 ist die Auswahlventilanordnung 26 mit seiner Anbindung an die Gangsteller 10, 11, 12, 13, 14 und die Betätigungsventilanordnung 25 vergrößert dargestellt. Die Steuerventilanordnung 27 ist dazu vorgesehen, die Auswahlventilanordnung 26 entsprechend dem zu schaltenden Getriebegang anzusteuern.

Die Betätigungsventilanordnung 25 weist ein erstes Betätigungsventil 28 und ein zweites Betätigungsventil 29 auf, die jeweils dazu vorgesehen sind, den Betätigungsdruck für die Gangstellerdruckräume 15-24 einzustellen. Die zwei Betätigungsventile 28, 29 sind strömungstechnisch parallel zueinander angeordnet. Die Betätigungsventile 28, 29 sind jeweils eingangsseitig an die Betriebsmittelpumpen 30, 31 und ausgangsseitig an die Auswahlventilanordnung 26 angebunden. Die zwei Betätigungsventile 28, 29 sind zur Einstellung des Betätigungsdrucks jeweils elektrisch ansteuerbar. Die Betätigungsventile 28, 29 sind jeweils als ein Regelmagnetventil ausgebildet. Sie sind jeweils als ein Proportionaldruckregelventil ausgebildet.

Die Auswahlventilanordnung 26 weist eine erste Auswahlventileinheit 32, eine zweite Auswahlventileinheit 33 und eine dritte Auswahlventileinheit 34 auf, die dazu vorgesehen sind, die Betätigungsventile 28, 29 entsprechend dem zu schaltenden Getriebegang an die Gangstellerdruckräume 15-24 anzubinden. Die Auswahlventileinheiten 32, 33, 34 sind dazu vorgesehen, wahlweise das erste Betätigungsventil 28 an die ersten Gangstellerdruckräume 15, 17, 19, 21, 23 und das zweite Betätigungsventil 29 an die zweiten Gangstellerdruckräume 16, 18, 20, 22, 24 anzubinden.

Die erste Auswahlventileinheit 32 weist lediglich ein einziges Auswahlventil 35 auf. Die erste Auswahlventileinheit 32 ist durch das Auswahlventil 35 gebildet. Die zweite Auswahlventileinheit 33 weist lediglich ein einziges Auswahlventil 36 auf. Die zweite Auswahlventileinheit 33 ist durch das Auswahlventil 36 gebildet. Die dritte Auswahlventileinheit 34 weist lediglich ein erstes Auswahlventil 37 und ein zweites Auswahlventil 38 auf. Die dritte Auswahlventileinheit 34 ist durch das Auswahlventil 37 und das Auswahlventil 38 gebildet. Die Auswahlventile 35, 36, 37, 38 sind jeweils als ein rein hydraulischer Schaltschieber ausgebildet. Die Auswahlventile 35, 36, 37, 38 weisen jeweils acht Anschlüsse und zwei Ventilstellungen auf. Grundsätzlich können die Auswahlventile 37, 38 der dritten Auswahlventileinheit 34 zu einem einzigen Auswahlventil zusammengefasst werden, wodurch die dritte Auswahlventileinheit 34 ebenfalls lediglich nur ein einziges Auswahlventil aufweist, das die Funktion der zwei Auswahlventile 37, 38 darstellt.

Die erste Auswahlventileinheit 32 bindet hydraulisch die beiden Betätigungsventile 28, 29 permanent an die dritte Auswahlventileinheit 34 an. Die erste Auswahlventileinheit 32 bindet die beiden Betätigungsventile 28, 29 in sämtlichen seiner Ventilstellungen an die dritte Auswahlventileinheit 34 an. Die erste Auswahlventileinheit 32 bindet in Abhängigkeit seiner Ventilstellung die beiden Betätigungsventile 28, 29 entweder an das erste Auswahlventil 38 der dritten Auswahlventileinheit 34 oder an das zweite Auswahlventil 38 der dritten Auswahlventileinheit 34 an.

Die erste Auswahlventileinheit 32 umfasst einen ersten Eingang 35.1, der an dem ersten Betätigungsventil 28 angebunden ist, und einen zweiten Eingang 35.2, der an dem zweiten Betätigungsventil 29 angebunden ist. Die erste Auswahlventileinheit 32 umfasst einen ersten Ausgang 35.4 und einen zweiten Ausgang 35.3, die wahlweise mit dem ersten Eingang 35.1 der ersten Auswahlventileinheit 32 verbindbar sind, sowie einen dritten Ausgang 35.6 und einen vierten Ausgang 35.5, die wahlweise mit dem zweiten Eingang 35.2 der ersten Auswahlventileinheit 32 verbindbar sind. Der erste Ausgang 35.4 und der dritte Ausgang 35.6 der ersten Auswahlventileinheit 32 sind hydraulisch an das erste Auswahlventil 37 der dritten Auswahlventileinheit 34 angebunden. Der zweite Ausgang 35.3 und der vierte Ausgang 35.5 der ersten Auswahlventileinheit 32 sind hydraulisch an das zweite Auswahlventil 38 der dritten Auswahlventileinheit 34 angebunden.

Die erste Auswahlventileinheit 32 weist zwei Ventilstellungen auf. In seiner ersten Ventilstellung bindet die erste Auswahlventileinheit 32 die zwei Betätigungsventile 28, 29 an das erste Auswahlventil 37 der dritten Auswahlventileinheit 34 an. In der ersten Ventilstellung der ersten Auswahlventileinheit 32 sind der erste Eingang 35.1 an den ersten Ausgang 35.4 und der zweite Eingang 35.2 an den dritten Ausgang 35.6 angebunden. In seiner ersten Ventilstellung leitet die erste Auswahlventileinheit 32 den durch die Betätigungsventile 28, 29 eingestellten Betätigungsdruck zu dem ersten Auswahlventil 37 der dritten Auswahlventileinheit 34 weiter. In seiner zweiten Ventilstellung bindet die erste Auswahlventileinheit 32 die zwei Betätigungsventile 28, 29 an das zweite Auswahlventil 38 der dritten Auswahlventileinheit 34 an. In der zweiten Ventilstellung der ersten Auswahlventileinheit 32 sind der erste Eingang 35.1 an den zweiten Ausgang 35.3 und der zweite Eingang 35.2 an den vierten Ausgang 35.5 angebunden. In seiner zweiten Ventilstellung leitet die erste Auswahlventileinheit 32 den durch die Betätigungsventile 28, 29 eingestellten Betätigungsdruck zu dem zweiten Auswahlventil 38 der dritten Auswahlventileinheit 34 weiter.

Zur Einstellung der ersten Ventilstellung weist die erste Auswahlventileinheit 32 eine Feder 39 auf. Zur Einstellung der zweiten Ventilstellung weist die erste Auswahlventileinheit 32 einen Steuerdruckraum 40 auf. Eine Federkraft der Feder 39 und eine durch einen Steuerdruck in dem Steuerdruckraum 40 erzeugbare Schaltkraft wirken einander entgegen. Die erste Ventilstellung der ersten Auswahlventileinheit 32 ist als eine Grundstellung ausgebildet. Die zweite Ventilstellung der ersten Auswahlventileinheit 32 ist als eine Schaltstellung ausgebildet.

Die zweite Auswahlventileinheit 33 bindet hydraulisch die dritte Auswahlventileinheit 34 permanent an zwei der Gangstellerdruckräume 21, 22, 23, 24 an. Sie bindet das zweite Auswahlventil 38 der dritten Auswahlventileinheit 34 permanent an zwei der Gangstellerdruckräume 21, 22, 23, 24 an. Die zweite Auswahlventileinheit 33 bindet die dritte Auswahlventileinheit 34 in sämtlichen seiner Ventilstellungen an zwei der Gangstellerdruckräume 21, 22, 23, 24 an. Sie bindet das zweite Auswahlventil 38 der dritten Auswahlventileinheit 34 in sämtlichen seiner Ventilstellungen an zwei der Gangstellerdruckräume 21, 22, 23, 24 an. Die zweite Auswahlventileinheit 33 ist dazu vorgesehen, zwischen der Anbindung der dritten Auswahlventileinheit 34 an den vierten Gangsteller 13 und der Anbindung der dritten Auswahlventileinheit 34 an den fünften Gangsteller 14 zu wechseln. Die zweite Auswahlventileinheit 33 bindet in Abhängigkeit seiner Ventilstellung die dritte Auswahlventileinheit 34 entweder an die zwei Gangstellerdruckräume 21, 22 des vierten Gangstellers 13 oder an die zwei Gangstellerdruckräume 23, 24 des fünften Gangstellers 14 an. Sie bindet in Abhängigkeit seiner Ventilstellung das zweite Auswahlventil 38 der dritten Auswahlventileinheit 34 entweder an die zwei Gangstellerdruckräume 21, 22 des vierten Gangstellers 13 oder an die zwei Gangstellerdruckräume 23, 24 des fünften Gangstellers 14 an.

Die zweite Auswahlventileinheit 33 weist einen ersten Eingang 36.1 und einen zweiten Eingang 36.2 auf, die an dem zweiten Auswahlventil 38 der dritten Auswahlventileinheit 34 angebunden sind. Der erste Eingang 36.1 der zweiten Auswahlventileinheit 33 ist über die dritte Auswahlventileinheit 34 und die erste Auswahlventileinheit 32 hydraulisch an das erste Betätigungsventil 28 anbindbar. Der zweite Eingang 36.2 der zweiten Auswahlventileinheit 33 ist über die dritte Auswahlventileinheit 34 und die erste Auswahlventileinheit 32 hydraulisch an das zweite Betätigungsventil 29 anbindbar. Die zweite Auswahlventileinheit 33 umfasst einen ersten Ausgang 36.4 und einen zweiten Ausgang 36.3, die wahlweise mit dem ersten Eingang 36.1 der zweiten Auswahlventileinheit 33 verbindbar sind, sowie einen dritten Ausgang 36.6 und einen vierten Ausgang 36.5, die wahlweise mit dem zweiten Eingang 36.2 der zweiten Auswahlventileinheit 33 verbindbar sind. Der erste Ausgang 36.4 und der dritte Ausgang 36.6 der zweiten Auswahlventileinheit 33 sind hydraulisch an den fünften Gangsteller 14 angebunden. Der erste Ausgang 36.4 der zweiten Auswahlventileinheit 33 ist an den ersten Gangstellerdruckraum 23 des fünften Gangstellers 14 angebunden. Der dritte Ausgang 36.6 der zweiten Auswahlventileinheit 33 ist an den zweiten Gangstellerdruckraum 24 des fünften Gangstellers 14 angebunden. Der zweite Ausgang 36.3 und der vierte Ausgang 36.5 der zweiten Auswahlventileinheit 33 sind hydraulisch an den vierten Gangsteller 13 angebunden. Der zweite Ausgang 36.3 der zweiten Auswahlventileinheit 33 ist an den ersten Gangstellerdruckraum 21 des vierten Gangstellers 13 angebunden. Der vierte Ausgang 36.5 der zweiten Auswahlventileinheit 33 ist an den zweiten Gangstellerdruckraum 22 des vierten Gangstellers 13 angebunden.

Die zweite Auswahlventileinheit 33 weist zwei Ventilstellungen auf. In seiner ersten Ventilstellung bindet die zweite Auswahlventileinheit 33 die dritte Auswahlventileinheit 34 an die zwei Gangstellerdruckräume 23, 24 des fünften Gangstellers 14 an. In seiner ersten Ventilstellung bindet die zweite Auswahlventileinheit 33 das zweite Auswahlventil 38 der dritten Auswahlventileinheit 34 an die zwei Gangstellerdruckräume 23, 24 des fünften Gangstellers 14 an. In der ersten Ventilstellung der zweiten Auswahlventileinheit 33 sind der erste Eingang 36.1 an den ersten Ausgang 36.4 und der zweite Eingang 36.2 an den dritten Ausgang 36.6 angebunden. In seiner ersten Ventilstellung leitet die zweite Auswahlventileinheit 33 einen durch das zweite Auswahlventil 38 der dritten Auswahlventileinheit 34 weitergeleiteten Betätigungsdruck zu dem fünften Gangsteller 14 weiter. In seiner zweiten Ventilstellung bindet die zweite Auswahlventileinheit 33 die dritte Auswahlventileinheit 34 an die zwei Gangstellerdruckräume 21, 22 des vierten Gangstellers 13 an. In seiner zweiten Ventilstellung bindet die zweite Auswahlventileinheit 33 das zweite Auswahlventil 38 der dritten Auswahlventileinheit 34 an die zwei Gangstellerdruckräume 21, 22 des vierten Gangstellers 13 an. In der zweiten Ventilstellung der zweiten Auswahlventileinheit 33 sind der erste Eingang 36.1 an den zweiten Ausgang 36.3 und der zweite Eingang 36.2 an den vierten Ausgang 36.5 angebunden. In seiner zweiten Ventilstellung leitet die zweite Auswahlventileinheit 33 den durch das zweite Auswahlventil 38 der dritten Auswahlventileinheit 34 weitergeleiteten Betätigungsdruck zu dem vierten Gangsteller 13 weiter.

Zur Einstellung der ersten Ventilstellung weist die zweite Auswahlventileinheit 33 eine Feder 41 auf. Zur Einstellung der zweiten Ventilstellung weist die zweite Auswahlventileinheit 33 einen Steuerdruckraum 42 auf. Eine Federkraft der Feder 41 und eine durch einen Steuerdruck in dem Steuerdruckraum 42 erzeugbare Schaltkraft wirken einander entgegen. Die erste Ventilstellung der zweiten Auswahlventileinheit 33 ist als eine Grundstellung ausgebildet. Die zweite Ventilstellung der zweiten Auswahlventileinheit 33 ist als eine Schaltstellung ausgebildet.

Die erste Auswahlventileinheit 32 und die zweite Auswahlventileinheit 33 weisen voneinander unterschiedliche Schaltdruckschwellen auf. Die Schaltdruckschwelle der ersten Auswahlventileinheit 32 unterscheidet sich von der Schaltdruckschwelle der zweiten Auswahlventileinheit 33. Die Schaltdruckschwelle der zweiten Auswahlventileinheit 33 ist größer als die Schaltdruckschwelle der ersten Auswahlventileinheit 32. Die erste Auswahlventileinheit 32 schaltet im Vergleich zu der zweiten Auswahlventileinheit 33 bei einem kleineren Steuerdruck in die zweite Ventilstellung. Die Feder 41 der zweiten Auswahlventileinheit 33 weist eine größere Federvorspannung auf als die Feder 39 der ersten Auswahlventileinheit 32.

Die dritte Auswahlventileinheit 34 ist dazu vorgesehen, die erste Auswahlventileinheit 32 an drei der Gangsteller 10, 11, 12 und an die zweite Auswahlventileinheit 33 anzubinden. Das erste Auswahlventil 37 der dritten Auswahlventileinheit 34 bindet hydraulisch die erste Auswahlventileinheit 32 permanent an zwei der Gangstellerdruckräume 15, 16, 17, 18 an. Das erste Auswahlventil 37 der dritten Auswahlventileinheit 34 bindet die erste Auswahlventileinheit 32 in sämtlichen seiner Ventilstellungen an zwei der Gangstellerdruckräume 15, 16, 17, 18 an. Das erste Auswahlventil 37 der dritten Auswahlventileinheit 34 ist dazu vorgesehen, zwischen der Anbindung der ersten Auswahlventileinheit 32 an den ersten Gangsteller 10 und der Anbindung der ersten Auswahlventileinheit 32 an den zweiten Gangsteller 11 zu wechseln. Das erste Auswahlventil 37 der dritten Auswahlventileinheit 34 bindet in Abhängigkeit seiner Ventilstellung die erste Auswahlventileinheit 32 entweder an die zwei Gangstellerdruckräume 15, 16 des ersten Gangstellers 10 oder an die zwei Gangstellerdruckräume 17, 18 des zweiten Gangstellers 11 an.

Das erste Auswahlventil 37 der dritten Auswahlventileinheit 34 weist einen ersten Eingang 37.1 und einen zweiten Eingang 37.2 auf, die an der ersten Auswahlventileinheit 32 angebunden sind. Der erste Eingang 37.1 des ersten Auswahlventils 37 ist über die erste Auswahlventileinheit 32 hydraulisch an das erste Betätigungsventil 28 anbindbar. Der zweite Eingang 37.2 des ersten Auswahlventils 37 ist über die erste Auswahlventileinheit 32 hydraulisch an das zweite Betätigungsventil 29 anbindbar. Der erste Eingang 37.1 des ersten Auswahlventils 37 ist hydraulisch an dem ersten Ausgang 35.4 der ersten Auswahlventileinheit 32 angebunden. Der zweite Eingang 37.2 des ersten Auswahlventils 37 ist hydraulisch an dem dritten Ausgang 35.6 der ersten Auswahlventileinheit 32 angebunden. Das erste Auswahlventil 37 der dritten Auswahlventileinheit 34 umfasst einen ersten Ausgang 37.4 und einen zweiten Ausgang 37.3, die wahlweise mit dem ersten Eingang 37.1 des ersten Auswahlventils 37 verbindbar sind, sowie einen dritten Ausgang 37.6 und einen vierten Ausgang 37.5, die wahlweise mit dem zweiten Eingang 37.2 des ersten Auswahlventils 37 verbindbar sind. Der erste Ausgang 37.4 und der dritte Ausgang 37.6 des ersten Auswahlventils 37 sind hydraulisch an den ersten Gangsteller 10 angebunden. Der erste Ausgang 37.4 des ersten Auswahlventils 37 ist an den ersten Gangstellerdruckraum 15 des ersten Gangstellers 10 angebunden. Der dritte Ausgang 37.6 des ersten Auswahlventils 37 ist an den zweiten Gangstellerdruckraum 16 des ersten Gangstellers 10 angebunden. Der zweite Ausgang 37.3 und der vierte Ausgang 37.5 des ersten Auswahlventils 37 sind hydraulisch an den zweiten Gangsteller 11 angebunden. Der zweite Ausgang 37.3 des ersten Auswahlventils 37 ist an den ersten Gangstellerdruckraum 17 des zweiten Gangstellers 11 angebunden. Der vierte Ausgang 37.5 des ersten Auswahlventils 37 ist an den zweiten Gangstellerdruckraum 18 des zweiten Gangstellers 11 angebunden.

Das erste Auswahlventil 37 der dritten Auswahlventileinheit 34 weist zwei Ventilstellungen auf. In seiner ersten Ventilstellung bindet das erste Auswahlventil 37 der dritten Auswahlventileinheit 34 die erste Auswahlventileinheit 32 an die zwei Gangstellerdruckräume 15, 16 des ersten Gangstellers 10 an. In der ersten Ventilstellung des ersten Auswahlventils 37 sind der erste Eingang 37.1 an den ersten Ausgang 37.4 und der zweite Eingang 37.2 an den dritten Ausgang 37.6 angebunden. In seiner ersten Ventilstellung leitet das erste Auswahlventil 37 der dritten Auswahlventileinheit 34 einen durch die erste Auswahlventileinheit 32 weitergeleiteten Betätigungsdruck zu dem ersten Gangsteller 10 weiter. In seiner zweiten Ventilstellung bindet das erste Auswahlventil 37 der dritten Auswahlventileinheit 34 die erste Auswahlventileinheit 32 an die zwei Gangstellerdruckräume 17, 18 des zweiten Gangstellers 11 an. In der zweiten Ventilstellung des ersten Auswahlventils 37 sind der erste Eingang 37.1 an den zweiten Ausgang 37.3 und der zweite Eingang 37.2 an den vierten Ausgang 37.5 angebunden. In seiner zweiten Ventilstellung leitet das erste Auswahlventil 37 der dritten Auswahlventileinheit 34 den durch die erste Auswahlventileinheit 32 weitergeleiteten Betätigungsdruck zu dem zweiten Gangsteller 11 weiter.

Zur Einstellung der ersten Ventilstellung weist das erste Auswahlventil 37 der dritten Auswahlventileinheit 34 eine Feder 43 auf. Zur Einstellung der zweiten Ventilstellung weist das erste Auswahlventil 37 der dritten Auswahlventileinheit 34 einen Steuerdruckraum 44 auf. Eine Federkraft der Feder 43 und eine durch einen Steuerdruck in dem Steuerdruckraum 44 erzeugbare Schaltkraft wirken einander entgegen. Die erste Ventilstellung des ersten Auswahlventils 37 der dritten Auswahlventileinheit 34 ist als eine Grundstellung ausgebildet. Die zweite Ventilstellung des ersten Auswahlventils 37 der dritten Auswahlventileinheit 34 ist als eine Schaltstellung ausgebildet.

Das zweite Auswahlventil 38 der dritten Auswahlventileinheit 34 bindet hydraulisch die erste Auswahlventileinheit 32 wahlweise an zwei der Gangstellerdruckräume 19, 20 oder an die zweite Auswahlventileinheit 33 an. Das zweite Auswahlventil 38 der dritten Auswahlventileinheit 34 ist dazu vorgesehen, zwischen der Anbindung der ersten Auswahlventileinheit 32 an einen der Gangsteller 12 und der Anbindung der ersten Auswahlventileinheit 32 an die zweite Auswahlventileinheit 33 zu wechseln. Es ist dazu vorgesehen, zwischen der Anbindung der ersten Auswahlventileinheit 32 an den dritten Gangsteller 12 und der Anbindung der ersten Auswahlventileinheit 32 an die zweite Auswahlventileinheit 33 zu wechseln. Das zweite Auswahlventil 38 der dritten Auswahlventileinheit 34 bindet in Abhängigkeit seiner Ventilstellung die erste Auswahlventileinheit 32 entweder an die zwei Gangstellerdruckräume 19, 20 des dritten Gangstellers 12 oder an die zweite Auswahlventileinheit 33 an.

Das zweite Auswahlventil 38 der dritten Auswahlventileinheit 34 weist einen ersten Eingang 38.1 und einen zweiten Eingang 38.2 auf, die an der ersten Auswahlventileinheit 32 angebunden sind. Der erste Eingang 38.1 des zweiten Auswahlventils 38 ist über die erste Auswahlventileinheit 32 hydraulisch an das erste Betätigungsventil 28 anbindbar.

Der zweite Eingang 38.2 des zweiten Auswahlventils 38 ist über die erste Auswahlventileinheit 32 hydraulisch an das zweite Betätigungsventil 29 anbindbar. Der erste Eingang 38.1 des zweiten Auswahlventils 38 ist hydraulisch an dem zweiten Ausgang 35.3 der ersten Auswahlventileinheit 32 angebunden. Der zweite Eingang 38.2 des zweiten Auswahlventils 38 ist hydraulisch an dem vierten Ausgang 35.5 der ersten Auswahlventileinheit 32 angebunden. Das zweite Auswahlventil 38 der dritten Auswahlventileinheit 34 umfasst einen ersten Ausgang 38.4 und einen zweiten Ausgang 38.3, die wahlweise mit dem ersten Eingang 38.1 des zweiten Auswahlventils 38 verbindbar sind, sowie einen dritten Ausgang 38.6 und einen vierten Ausgang 38.5, die wahlweise mit dem zweiten Eingang 38.2 des zweiten Auswahlventils 38 verbindbar sind. Der erste Ausgang 38.4 und der dritte Ausgang 38.6 des zweiten Auswahlventils 38 sind hydraulisch an die zweite Auswahlventileinheit 33 angebunden. Der erste Ausgang 38.4 des zweiten Auswahlventils 38 ist an dem ersten Eingang 36.1 der zweiten Auswahlventileinheit 33 angebunden. Der dritte Ausgang 38.6 des zweiten Auswahlventils 38 ist an den zweiten Eingang 36.2 der zweiten Auswahlventileinheit 33 angebunden. Der zweite Ausgang 38.3 und der vierte Ausgang 38.5 des zweiten Auswahlventils 38 sind hydraulisch an den dritten Gangsteller 12 angebunden. Der zweite Ausgang 38.3 des zweiten Auswahlventils 38 ist an den ersten Gangstellerdruckraum 19 des dritten Gangstellers 12 angebunden. Der vierte Ausgang 38.5 des zweiten Auswahlventils 38 ist an den zweiten Gangstellerdruckraum 20 des dritten Gangstellers 12 angebunden.

Das zweite Auswahlventil 38 der dritten Auswahlventileinheit 34 weist zwei Ventilstellungen auf. In seiner ersten Ventilstellung bindet das zweite Auswahlventil 38 der dritten Auswahlventileinheit 34 die erste Auswahlventileinheit 32 an die zweite Auswahlventileinheit 33 an. In der ersten Ventilstellung des zweiten Auswahlventils 38 sind der erste Eingang 38.1 an den ersten Ausgang 38.4 und der zweite Eingang 38.2 an den dritten Ausgang 38.6 angebunden. In seiner ersten Ventilstellung leitet das zweite Auswahlventil 38 der dritten Auswahlventileinheit 34 einen durch die erste Auswahlventileinheit 32 weitergeleiteten Betätigungsdruck zu der zweiten Auswahlventileinheit 33 weiter. In seiner zweiten Ventilstellung bindet das zweite Auswahlventil 38 der dritten Auswahlventileinheit 34 die erste Auswahlventileinheit 32 an die zwei Gangstellerdruckräume 19, 20 des dritten Gangstellers 12 an. In der zweiten Ventilstellung des zweiten Auswahlventils 38 sind der erste Eingang 38.1 an den zweiten Ausgang 38.3 und der zweite Eingang 38.2 an den vierten Ausgang 38.5 des zweiten Auswahlventils 38 angebunden. In seiner zweiten Ventilstellung leitet das zweite Auswahlventil 38 der dritten Auswahlventileinheit 34 den durch die erste Auswahlventileinheit 32 weitergeleiteten Betätigungsdruck zu dem dritten Gangsteller 12 weiter.

Zur Einstellung der ersten Ventilstellung weist das zweite Auswahlventil 38 der dritten Auswahlventileinheit 34 eine Feder 45 auf. Zur Einstellung der zweiten Ventilstellung weist das zweite Auswahlventil 38 der dritten Auswahlventileinheit 34 einen Steuerdruckraum 46 auf. Eine Federkraft der Feder 45 und eine durch einen Steuerdruck in dem Steuerdruckraum 46 erzeugbare Schaltkraft wirken einander entgegen. Die erste Ventilstellung des zweiten Auswahlventils 38 der dritten Auswahlventileinheit 34 ist als eine Grundstellung ausgebildet. Die zweite Ventilstellung des zweiten Auswahlventils 38 der dritten Auswahlventileinheit 34 ist als eine Schaltstellung ausgebildet.

Das erste Auswahlventil 37 und das zweite Auswahlventil 38 der dritten Auswahlventileinheit 34 weisen identische Schaltdruckschwellen auf. Die Schaltdruckschwelle des ersten Auswahlventils 37 und die Schaltdruckschwelle des zweiten Auswahlventils 38 sind gleich groß. Die Auswahlventile 37, 38 schalten gelichzeitig in die zweite Ventilstellung. Die Federn 43, 45 der Auswahlventile 37, 38 weisen eine gleiche Federvorspannung auf.

Die Auswahlventile 37, 38 der dritten Auswahlventileinheit 34 und das Ventil 48 der Parksperrenvorrichtung 47 weisen voneinander unterschiedliche Schaltdruckschwellen auf. Die Schaltdruckschwelle der dritten Auswahlventileinheit 34 und damit der zwei Auswahlventile 37, 38 unterscheidet sich von der Schaltdruckschwelle des Ventils 48. Die Schaltdruckschwelle des Ventils 48 ist größer als die Schaltdruckschwelle der dritten Auswahlventileinheit 34. Die beiden Auswahlventile 37, 38 der dritten Auswahlventileinheit 34 schalten im Vergleich zu dem Ventil 48 der Parksperrenvorrichtung 47 bei einem kleineren Steuerdruck in die zweite Ventilstellung. Die Federn 43, 45 der Auswahlventile 37, 38 weisen eine kleinere Federvorspannung auf als eine Feder des Ventils 48.

Die zwei Auswahlventile 37, 38 sind nur gemeinsam schaltbar. Sie sind beide entweder in der ersten Ventilstellung oder in der zweiten Ventilstellung geschaltet. Es ist insbesondere nicht vorgesehen, dass das erste Auswahlventil 37 in der ersten Ventilstellung und das zweite Auswahlventil 38 in der zweite Ventilstellung und umgekehrt geschaltet sind. Die dritte Auswahlventileinheit 34 weist eine erste Ventilstellung und eine zweite Ventilstellung auf. In seiner ersten Ventilstellung bindet die dritte Auswahlventileinheit 34 die erste Auswahlventileinheit 32 an den ersten Gangsteller 10 und an die zweite Auswahlventileinheit 33 an. In seiner zweiten Ventilstellung bindet die dritte Auswahlventileinheit 34 die erste Auswahlventileinheit 32 an den zweiten Gangstellers 11 und an den dritten Gangsteller 12 an.

In einem Zustand, in dem die erste Auswahlventileinheit 32 und die Auswahlventile 37, 38 in der ersten Ventilstellung geschaltet sind, ist mittels dem ersten Betätigungsventil 28 der Betätigungsdruck in dem Gangstellerdruckraum 15 und mittels dem zweiten Betätigungsventil 29 der Betätigungsdruck in dem Gangstellerdruckraum 16 einstellbar.

In einem Zustand, in dem die erste Auswahlventileinheit 32 in der ersten Ventilstellung und die Auswahlventile 37, 38 in der zweiten Ventilstellung geschaltet sind, ist mittels dem ersten Betätigungsventil 28 der Betätigungsdruck in dem Gangstellerdruckraum 17 und mittels dem zweiten Betätigungsventil 29 der Betätigungsdruck in dem Gangstellerdruckraum 18 einstellbar.

In einem Zustand, in dem die erste Auswahlventileinheit 32 und die Auswahlventile 37, 38 in der zweiten Ventilstellung geschaltet sind, ist mittels dem ersten Betätigungsventil 28 der Betätigungsdruck in dem Gangstellerdruckraum 19 und mittels dem zweiten Betätigungsventil 29 der Betätigungsdruck in dem Gangstellerdruckraum 20 einstellbar.

In einem Zustand, in dem die erste Auswahlventileinheit 32 und die zweite Auswahlventileinheit 33 in der zweiten Ventilstellung sowie die Auswahlventile 37, 38 in der ersten Ventilstellung geschaltet sind, ist mittels dem ersten Betätigungsventil 28 der Betätigungsdruck in dem Gangstellerdruckraum 21 und mittels dem zweiten Betätigungsventil 29 der Betätigungsdruck in dem Gangstellerdruckraum 22 einstellbar.

In einem Zustand, in dem die erste Auswahlventileinheit 32 und die Auswahlventile 37, 38 in der zweiten Ventilstellung sowie die zweite Auswahlventileinheit 33 in der ersten Ventilstellung geschaltet sind, ist mittels dem ersten Betätigungsventil 28 der Betätigungsdruck in dem Gangstellerdruckraum 23 und mittels dem zweiten Betätigungsventil 29 der Betätigungsdruck in dem Gangstellerdruckraum 24 einstellbar.

Zur Einstellung der erwähnten Zustände weist die Steuerventilanordnung 27 ein erstes Steuerventil 49 und ein zweites Steuerventil 50 auf. Das erste Steuerventil 49 ist steuerungstechnisch an die erste Auswahlventileinheit 32 und die zweite Auswahlventileinheit 33 angebunden. Das erste Steuerventil 49 weist einen Ausgang auf, der hydraulisch permanent an den Steuerdruckraum 40 der ersten Auswahlventileinheit 32 und hydraulisch permanent an den Steuerdruckraum 42 der zweiten Auswahlventileinheit 33 angebunden ist. Eingangsseitig ist das erste Steuerventil 49 an die Betriebsmittelpumpen 30, 31 angebunden. Das erste Steuerventil 49 ist dazu vorgesehen, zur getrennten Schaltung der ersten Auswahlventileinheit 32 und der zweiten Auswahlventileinheit 33 zwei voneinander unterschiedliche Steuerdrücke für die zwei Auswahlventileinheiten 32, 33 einzustellen. Zur Schaltung lediglich der ersten Auswahlventileinheit 32 in seine zweite Ventilstellung ist das erste Steuerventil 49 dazu vorgesehen, einen ersten Steuerdruck einzustellen, der größer ist als die Schaltdruckschwelle der ersten Auswahlventileinheit 32 und kleiner ist als die Schaltdruckschwelle der zweiten Auswahlventileinheit 33. Zur Schaltung der zweiten Auswahlventileinheit 33 in seine zweite Ventilstellung ist das erste Steuerventil 49 dazu vorgesehen, einen zweiten Steuerdruck einzustellen, der größer ist als die Schaltdruckschwelle der ersten Auswahlventileinheit 32 und größer ist als die Schaltdruckschwelle der zweiten Auswahlventileinheit 33. Wenn die zweite Auswahlventileinheit 33 in der zweiten Ventilstellung geschaltet ist, ist damit auch die erste Auswahlventileinheit 32 in der zweiten Ventilstellung geschaltet. Das erste Steuerventil 49 ist zur Einstellung des Steuerdrucks elektrisch ansteuerbar. Das erste Steuerventil 49 ist als ein Regelmagnetventil ausgebildet. Es ist als ein Proportionaldruckregelventil ausgebildet. In diesem Ausführungsbeispiel beträgt der erste Steuerdruck 4 bar und der zweite Steuerdruck 8 bar.

Das zweite Steuerventil 50 ist steuerungstechnisch an die dritte Auswahlventileinheit 34 und an die Parksperrenvorrichtung 47 angebunden. Es ist steuerungstechnisch an das erste Auswahlventil 37 der dritten Auswahlventileinheit 34, an das zweite Auswahlventil 38 der dritten Auswahlventileinheit 34 und an das Ventil 48 der Parksperrenvorrichtung 47 angebunden. Das zweite Steuerventil 50 weist einen Ausgang auf, der hydraulisch permanent an den Steuerdruckraum 44 des ersten Auswahlventils 37, an den Steuerdruckraum 46 des zweiten Auswahlventils 38 und an einen Steuerdruckraum des Ventils 48 angebunden ist. Eingangsseitig ist das zweite Steuerventil 50 an die Betriebsmittelpumpen 30, 31 angebunden. Das zweite Steuerventil 50 ist dazu vorgesehen, zur getrennten Schaltung der dritten Auswahlventileinheit 34 und des Ventils 48 zwei voneinander unterschiedliche Steuerdrücke für die dritte Auswahlventileinheit 34 und das Ventil 48 einzustellen. Zur Schaltung lediglich der dritten Auswahlventileinheit 34 in seine zweite Ventilstellung ist das zweite Steuerventil 50 dazu vorgesehen, einen ersten Steuerdruck einzustellen, der größer ist als die Schaltdruckschwelle der dritten Auswahlventileinheit 34 und kleiner ist als eine Schaltdruckschwelle des Ventils 48. Der erste Steuerdruck ist größer als die Schaltdruckschwellen der Auswahlventile 37, 38 der dritten Auswahlventileinheit 34. Zur Schaltung des Ventils 48 der Parksperrenvorrichtung 47 in seine zweite Ventilstellung ist das zweite Steuerventil 50 dazu vorgesehen, einen zweiten Steuerdruck einzustellen, der größer ist als die Schaltdruckschwellen der beiden Auswahlventile 37, 38 der dritten Auswahlventileinheit 34 und größer ist als die Schaltdruckschwelle des Ventils 48 der Parksperrenvorrichtung 47. Das zweite Steuerventil 50 ist zur Einstellung des Steuerdrucks elektrisch ansteuerbar. Das zweite Steuerventil 50 ist als ein Regelmagnetventil ausgebildet. Es ist als ein Proportionaldruckregelventil ausgebildet. In diesem Ausführungsbeispiel beträgt der erste Steuerdruck 4 bar und der zweite Steuerdruck 8 bar.

### Bezugszeichenliste

- 10: Gangsteller
- 11: Gangsteller
- 12: Gangsteller
- 13: Gangsteller
- 14: Gangsteller
- 15: Gangstellerdruckraum
- 16: Gangstellerdruckraum
- 17: Gangstellerdruckraum
- 18: Gangstellerdruckraum
- 19: Gangstellerdruckraum
- 20: Gangstellerdruckraum
- 21: Gangstellerdruckraum
- 22: Gangstellerdruckraum
- 23: Gangstellerdruckraum
- 24: Gangstellerdruckraum
- 25: Betätigungsventilanordnung
- 26: Auswahlventilanordnung
- 27: Steuerventilanordnung
- 28: Betätigungsventil
- 29: Betätigungsventil
- 30: Betriebsmittelpumpe
- 31: Betriebsmittelpumpe
- 32: Auswahlventileinheit
- 33: Auswahlventileinheit
- 34: Auswahlventileinheit
- 35: Auswahlventil
- 35.1: Eingang
- 35.2: Eingang
- 35.3: Ausgang
- 35.4: Ausgang
- 35.5: Ausgang
- 35.6: Ausgang
- 36: Auswahlventil
- 36.1: Eingang
- 36.2: Eingang
- 36.3: Ausgang
- 36.4: Ausgang
- 36.5: Ausgang
- 36.6: Ausgang
- 37: Auswahlventil
- 37.1: Eingang
- 37.2: Eingang
- 37.3: Ausgang
- 37.4: Ausgang
- 37.5: Ausgang
- 37.6: Ausgang
- 38: Auswahlventil
- 38.1: Eingang
- 38.2: Eingang
- 38.3: Ausgang
- 38.4: Ausgang
- 38.5: Ausgang
- 38.6: Ausgang
- 39: Feder
- 40: Steuerdruckraum
- 41: Feder
- 42: Steuerdruckraum
- 43: Feder
- 44: Steuerdruckraum
- 45: Feder
- 46: Steuerdruckraum
- 47: Parksperrenvorrichtung
- 48: Ventil
- 49: Steuerventil
- 50: Steuerventil

## Patentansprüche

1. Hydrauliksystem für ein Kraftfahrzeuggetriebe, mit wenigstens zehn Gangstellerdruckräumen (15-24), die zur Schaltung von mehreren Getriebegängen vorgesehen sind, mit wenigstens zwei Betätigungsventilen (28, 29), die jeweils dazu vorgesehen sind, zumindest einen Betätigungsdruck für die Gangstellerdruckräume (15-24) einzustellen, mit wenigstens einer ersten Auswahlventileinheit (32), wenigstens einer zweiten Auswahlventileinheit (33) und wenigstens einer dritten Auswahlventileinheit (34), die dazu vorgesehen sind, die Betätigungsventile (28, 29) an die Gangstellerdruckräume (15-24) anzubinden,
**dadurch gekennzeichnet, dass**
die zweite Auswahlventileinheit (33) zur Betätigungsdruckübertragung unmittelbar an vier Gangstellerdruckräume (21-24) angebunden ist und dass die dritte Auswahlventileinheit (34) zur Betätigungsdruckübertragung unmittelbar an 6 andere Gangstellerdruckräume (15-20) und unmittelbar an die zweite Auswahlventileinheit (33) angebunden ist.

2. Hydrauliksystem nach Anspruch 1,
**dadurch gekennzeichnet, dass**
die dritte Auswahlventileinheit (34) ein erstes und ein zweites Auswahlventil (37, 38) aufweist, wobei das zweite Auswahlventil (38) die erste Auswahlventileinheit (32) wahlweise an zwei der Gangstellerdruckräume (19, 20) oder an die zweite Auswahlventileinheit (33) hydraulisch anbindet.

3. Hydrauliksystem nach einem der vorhergehenden Ansprüche,
**gekennzeichnet durch**
ein erstes Steuerventil (49), das steuerungstechnisch zumindest an die erste Auswahlventileinheit (32) und die zweite Auswahlventileinheit (33) angebunden ist und das dazu vorgesehen ist, zur zumindest teilweise getrennten Schaltung der ersten Auswahlventileinheit (32) und der zweiten Auswahlventileinheit (33) zumindest zwei voneinander unterschiedliche Steuerdrücke einzustellen, und durch wenigstens ein zweites Steuerventil (50), das steuerungstechnisch zumindest an die dritte Auswahlventileinheit (34) angebunden ist und das dazu vorgesehen ist, zur Schaltung der dritten Auswahlventileinheit (34) zumindest einen Steuerdruck einzustellen,
wobei zumindest die erste Auswahlventileinheit (32) und die zweite Auswahlventileinheit (33) unterschiedliche Schaltdruckschwellen aufweisen

4. Hydrauliksystem nach einem der vorhergehenden Ansprüche,
**dadurch gekennzeichnet, dass**
die erste Auswahlventileinheit (32) dazu vorgesehen ist, beide Betätigungsventile (28, 29) an die dritte Auswahlventileinheit (34) anzubinden.

5. Hydrauliksystem nach einem der vorhergehenden Ansprüche,
**dadurch gekennzeichnet, dass**
die dritte Auswahlventileinheit (34) dazu vorgesehen ist, die erste Auswahlventileinheit (32) an die zweite Auswahlventileinheit (33) anzubinden.

6. Hydrauliksystem nach einem der vorhergehenden Ansprüche,
**dadurch gekennzeichnet, dass**
die dritte Auswahlventileinheit (34) dazu vorgesehen ist, die erste Auswahlventileinheit (32) an zumindest eines der Gangstellerdruckräume (15-20) anzubinden.

7. Hydrauliksystem nach einem der vorhergehenden Ansprüche,
**dadurch gekennzeichnet, dass**
die Schaltdruckschwelle der zweiten Auswahlventileinheit (33) größer ist als die Schaltdruckschwelle der ersten Auswahlventileinheit (32).

8. Hydrauliksystem nach einem der vorhergehenden Ansprüche,
**gekennzeichnet durch**
zumindest ein weiteres Ventil (48) mit einer von der dritten Auswahlventileinheit (34) unterscheidenden Schaltdruckschwelle, wobei das zweite Steuerventil (50) steuerungstechnisch an das zumindest eine weitere Ventil (48) angebunden ist und dazu vorgesehen ist, zur zumindest teilweise getrennten Schaltung der dritten Auswahlventileinheit (34) und des weiteren Ventils (48) zumindest zwei voneinander unterschiedliche Steuerdrücke einzustellen.

9. Hydrauliksystem nach Anspruch 8,
**dadurch gekennzeichnet, dass**
die Schaltdruckschwelle des weiteren Ventils (48) größer ist als die Schaltdruckschwelle der dritten Auswahlventileinheit (34).

10. Hydrauliksystem nach Anspruch 8 oder 9,
**dadurch gekennzeichnet, dass**
das weitere Ventil (48) zur Ansteuerung einer Parksperre vorgesehen ist.

11. Hydrauliksystem nach einem der vorhergehenden Ansprüche,
**gekennzeichnet durch**
wenigstens fünf doppeltwirkende Gangsteller (10, 11, 12, 13, 14), die jeweils zwei der Gangstellerdruckräume (15-24) aufweisen.

12. Hydrauliksystem nach Anspruch 11,
**dadurch gekennzeichnet, dass**
die Gangstellerdruckräume (15-24) in erste Gangstellerdruckräume (15, 17, 19, 21, 23) der Gangsteller (10, 11, 12, 13, 14) und in zweite Gangstellerdruckräume (16, 18, 20, 22, 24) der Gangsteller (10, 11, 12, 13, 14) unterteilt sind und die Auswahlventileinheiten (32, 33, 34) dazu vorgesehen sind, das erste Betätigungsventil (28) an die ersten Gangstellerdruckräume (15, 17, 19, 21, 23) und das zweite Betätigungsventil (29) an die zweiten Gangstellerdruckräume (16, 18, 20, 22, 24) anzubinden.

## Claims

1. Hydraulic system for a motor vehicle gearbox, with at least ten gear selector pressure chambers (15 - 24) provided for to select several gears, with at least two actuating valves (28, 29), each of which is provided to set at least one actuating pressure for the gear selector pressure chambers (15 - 24), with at least one first selection valve unit (32), at least one second selection valve unit (33) and at least one third selection valve unit (34), which are provided to connect the actuating valves (28, 29) to the gear selector pressure chambers (15 - 24),
**characterised in that**
the second selection valve unit (33) is directly connected to four gear selector pressure chambers (21 - 24) for actuating pressure transmission and the third selection valve unit (34) is directly connected to six other gear selector pressure chambers (15 - 20) and to the second selection valve unit (33) for actuating pressure transmission.

2. Hydraulic system according to claim 1,
**characterised in that**
the third selection valve unit (34) comprises a first and a second selection valve (37, 38), wherein the second selection valve (38) hydraulically connects the first selection valve unit (32) optionally to two of the gear selector pressure chambers (19, 20) or to the second selection valve unit (33).

3. Hydraulic system according to any of the preceding claims,
**characterised by**
a first control valve (49), which in terms of control technology is connected at least to the first selection valve unit (32) and to the second selection valve unit (33) and which is provided to set at least two different control pressures for the at least partially separate switching of the first selection valve unit (32) and of the second selection valve unit (33), and by at least one second control valve (50), which in terms of control technology is connected at least to the third selection valve unit (34) and which is provided to set at least one control pressure for switching the third selection valve unit (34),
wherein at least the first selection valve unit (32) and the second selection valve unit (33) have different switching pressure thresholds.

4. Hydraulic system according to any of the preceding claims,
**characterised in that**
the first selection valve unit (32) is provided to connect both actuating valves (28, 29) to the third selection valve unit (34).

5. Hydraulic system according to any of the preceding claims,
**characterised in that**
the third selection valve unit (34) is provided to connect the first selection valve unit (32) to the second selection valve unit (33).

6. Hydraulic system according to any of the preceding claims,
**characterised in that**
the third selection valve unit (34) is provided to connect the first selection valve unit (32) to at least one of the gear selector pressure chambers (15 - 20).

7. Hydraulic system according to any of the preceding claims,
**characterised in that**
the switching pressure threshold of the second selection valve unit (33) is higher than the switching pressure threshold of the first selection valve unit (32).

8. Hydraulic system according to any of the preceding claims,
**characterised by**
at least one further valve (48) with a switching pressure threshold which differs from that of the third selection valve unit (34), wherein the second control valve (50) is in terms of control technology connected to the at least one further valve (48) and provided to set at least two different control pressures for the at least partially separate switching of the third selection valve unit (34) and the further valve (48).

9. Hydraulic system according to claim 8,
**characterised in that**
the switching pressure threshold of the further valve (48) is higher than the switching pressure threshold of the third selection valve unit (34).

10. Hydraulic system according to claim 8 or 9,
**characterised in that**
the further valve (48) is provided to activate a parking lock.

11. Hydraulic system according to any of the preceding claims,
**characterised by**
at least five double-acting gear selectors (10, 11, 12, 13, 14), each of which has two of the gear selector pressure chambers (15 - 24).

12. Hydraulic system according to claim 11,
**characterised in that**
the gear selector pressure chambers (15 - 24) are divided into first gear selector pressure chambers (15, 17, 19, 21, 23) of the gear selectors (10, 11, 12, 13, 14) and second gear selector pressure chambers (16, 18, 20, 22, 24) of the gear selectors (10, 11, 12, 13, 14), and **in that** the selection valve units (32, 33, 34) are provided to connect the first actuating valve (28) to the first gear selector pressure chambers (15, 17, 19, 21, 23) and the second actuating valve (29) to the second gear selector pressure chambers (16, 18, 20, 22, 24).

## Revendications

1. Système hydraulique pour une transmission de véhicule automobile, comportant au moins dix chambres de pression (15-24) de dispositif de changement de rapport, qui permettent de changer plusieurs rapports de transmission, comportant au moins deux soupapes d'actionnement (28, 29) qui permettent respectivement de régler au moins une pression d'actionnement pour les chambres de pression (15-24) de dispositif de changement de rapport, comportant au moins un premier ensemble soupape de sélection (32), au moins un deuxième ensemble soupape de sélection (33) et au moins un troisième ensemble soupape de sélection (34) qui permettent de raccorder les soupapes d'actionnement (28, 29) aux chambres de pression (15-24) de dispositif de changement de rapport, **caractérisé en ce que** le deuxième ensemble soupape de sélection (33) est raccordé directement aux quatre chambres de pression (21-24) de dispositif de changement de rapport pour le transfert de pression d'actionnement et **en ce que** le troisième ensemble soupape de sélection (34) est raccordé directement aux 6 autres chambres de pression (15-20) de dispositif de changement de rapport et directement au deuxième ensemble soupape de sélection (33) pour le transfert de pression d'actionnement.

2. Système hydraulique selon la revendication 1, **caractérisé en ce que** le deuxième ensemble soupape de sélection (34) comporte une première et une seconde soupape de sélection (37, 38), la seconde soupape de sélection (38) raccorde hydrauliquement le premier ensemble soupape de sélection (32) sélectivement à deux des chambres de pression (19, 20) de dispositif de changement de rapport ou au deuxième ensemble soupape de sélection (33).

3. Système hydraulique selon l'une quelconque des revendications précédentes, **caractérisé par** une première soupape de commande (49) qui est raccordée par technique de commande au moins au premier ensemble soupape de sélection (32) et au deuxième ensemble soupape de sélection (33) et qui permet de régler au moins deux pressions de commande différentes l'une de l'autre pour la commutation au moins partiellement séparée du premier ensemble soupape de sélection (32) et du deuxième ensemble soupape de sélection (33) et par au moins une seconde soupape de commande (50) qui est raccordée par technique de commande au moins au troisième ensemble soupape de sélection (34) et qui permet à régler au moins une pression de commande pour la commutation du troisième ensemble soupape de sélection (34), au moins le premier ensemble soupape de sélection (32) et le deuxième ensemble soupape de sélection (33) présentant différents seuils de pression de commutation.

4. Système hydraulique selon l'une quelconque des revendications précédentes, **caractérisé en ce que** le premier ensemble soupape de sélection (32) permet de raccorder les deux soupapes d'actionnement (28, 29) au troisième ensemble soupape de sélection (34).

5. Système hydraulique selon l'une quelconque des revendications précédentes, **caractérisé en ce que** le troisième ensemble soupape de sélection (34) permet de raccorder le premier ensemble soupape de sélection (32) au deuxième ensemble soupape de sélection (33).

6. Système hydraulique selon l'une quelconque des revendications précédentes, **caractérisé en ce que** le troisième ensemble soupape de sélection (34) permet de raccorder le premier ensemble soupape de sélection (32) à au moins l'une des chambres de pression (15-20) de dispositif de changement de rapport.

7. Système hydraulique selon l'une quelconque des revendications précédentes, **caractérisé en ce que** le seuil de pression de commutation du deuxième ensemble soupape de sélection (33) est supérieur au seuil de pression de commutation du premier ensemble soupape de sélection (32).

8. Système hydraulique selon l'une quelconque des revendications précédentes, **caractérisé par** au moins un autre soupape (48) ayant un seuil de pression de commutation différent de celui du troisième ensemble soupape de sélection (34), la seconde soupape de commande (50) étant raccordée par technique de commande à l'au moins une autre soupape (48) et permettant de régler au moins deux pressions de commande différentes l'une de l'autre pour la commutation au moins partiellement séparée du troisième ensemble soupape de sélection (34) et de l'autre soupape (48).

9. Système hydraulique selon la revendication 8, **caractérisé en ce que** le seuil de pression de commutation de l'autre soupape (48) est supérieur au seuil de pression de commutation de l'ensemble soupape de sélection (34).

10. Système hydraulique selon la revendication 8 ou la revendication 9, **caractérisé en ce que** l'autre soupape (48) permet de commander un frein de stationnement.

11. Système hydraulique selon l'une quelconque des revendications précédentes, **caractérisé par** au moins cinq dispositifs de changement de rapport (10, 11, 12, 13, 14) à double effet qui respectivement comportent deux des chambres de pression (15-24) de dispositif de changement de rapport.

12. Système hydraulique selon la revendication 11, **caractérisé en ce que** les chambres de pression (15-24) de dispositif de changement de rapport sont divisées en premières chambres de pression (15, 17, 19, 21, 23) des dispositifs de changement de rapport (10, 11, 12, 13, 14) et en secondes chambres de pression (16, 18, 20, 22, 24) des dispositifs de changement de rapport (10, 11, 12, 13, 14) et les ensembles soupape de sélection (32, 33, 34) permettent de raccorder la première soupape d'actionnement (28) aux premières chambres de pression (15, 17, 19, 21, 23) de dispositif de changement de rapport et la seconde soupape d'actionnement (29) aux deuxièmes chambres de pression (16, 18, 20, 22, 24) de dispositif de changement de rapport.
